# EUROPEAN PATENT APPLICATION

(11) **EP 2 415 717 A1**
(43) Date of publication of application: **08.02.2012**
(21) Application number: 10171793.2
(22) Date of filing: 03.08.2010
(51) Int. Cl.: C02F 1/32, C02F 9/00

(54) **Water transport and purifying apparatus**

(71) Applicant: Karayalcin, Saltuk, 34433 Istanbul (TR)
(72) Inventor: Karayalcin, Saltuk, 34433 Istanbul (TR)
(74) Representative: Sevinç, Erkan

(57) **Abstract**

The present invention relates to an apparatus for storing, transporting and cleaning water. The apparatus comprises a water housing (20) having a raw water compartment (26) and a clean water compartment (27), at least one wheel (30, 30') for moving the apparatus from one location to another, a UV light source (25) in electrical communication with at least one electricity generator (14, 14') such that the generator (14, 14') produces electricity via rotation of the wheel (30, 30') for energizing the UV light source (25), a porous filter (28) for filtering out particles in the raw water, and a valve assembly (24) having a cut off valve (50) located on a piping (23), said valve assembly (24) being in electrical communication with the electricity generator (14, 14') wherein the assembly (24) is adapted to be activated based on a threshold value of current or voltage such that when threshold value is not exceeded cut out valve (50) is kept in closed position for not to allow water flow in the piping (23).

## Description

### Technical Field of the Invention

The present invention relates to an apparatus for storing, transporting and cleaning liquids while carrying from one location to another. The invention particularly relates to an apparatus for purifying water that is actuated by the motion energy, especially by the kinetic energy of the apparatus.

### Background of the Invention

Providing sanitized, or at least purified water for people in a community has been a crucial matter especially in developing countries and disaster areas. In the regions lacking of a water supply network potable water is obtained from the closest water source by way of physical effort. Even in the case that the water is transported and dispensed by some vehicles the water still remains with germs and dirt to a certain extent which otherwise may cause impairment of health in the society. The conventional water treatment devices require, in general, educated staff and complicated system components which usually requires electricity. UV irradiation, *inter alia* is known to be a fast and practical way of biological treatment of water which, however, require electricity sufficient to destroy bacteria and other germs by UV irradiation.

In certain regions lacking of electricity the above problems are attempted to be solved by physical treatment means such as filtration or even boiling of water. However, the fact is that water supplied from a natural source needs to be treated for obtaining sufficient sanitization and turbidity. In other words, filtration itself may only eliminate large particles and improve turbidity but is generally not sufficient to eliminate living organisms that may be harmful to human health.

In order to solve the aforementioned problems to a certain extent, WO 2008/099158 discloses a mobile apparatus having filtering means which are being activated by motion of the apparatus. Such motion results in enforcement of the liquid to pass through a number of filters arranged in between the dirty water and clean water compartments. The apparatus, however requires the pore sizes of the filters to be very small such that the microorganisms along with the suspended particles may be filtered out, and eventually the water to be sanitized. As may be appreciated by those skilled in the art, despite the filters with small pore sizes may effectively improve turbidity of water, they still fail sufficiently to eliminate the harmful bacteria. Furthermore, clogging problem is one of the major drawbacks when filters having small sizes are used in a purifying apparatus as mentioned above. In this case, if replacement filters are not available, the apparatus eventually becomes useless and requires urgent maintenance.

To solve these problems, various attempts have been focused on providing combined treatment, i.e. filtering and UV irradiation in the same device, for purifying raw water and obtaining potable water which is substantially clean. JP-A-2160009 and US 4,694,179 for instance, disclose devices including a combination of porous filter and ultraviolet light source. US 4,694,179 expresses that ultraviolet germicidal light destroys the bacteria and other germs, and at the same time cleans the porous filter by oxidizing the organic particles. The both devices, however are not suitable for use in the regions lacking electricity due to the fact that the devices are unable to produce electricity for the UV lamp arrangement. The devices further suffers of the drawbacks as they are not usable for water transport and storage purposes.

Because of the above stated problems of the state of the art devices, further arrangements have been provided which combine porous filters and UV lamps and produce their own electricity as well, as for instance disclosed in WO-A2-2005-040046. Accordingly, there is provided a manually operated water purifying device which electrically operates a UV-C lamp by an electrical generator driven by a moveable operating member. As may be appreciated by those skilled in the art, an apparatus of the above type is still not suitable to transport and store the water. But the major drawback of such devices energized by motion energy is that even when the electricity produced for UV lamp is not sufficient to substantially destroy the harmful germs water is still continuously dispensed, which in turn causes the water be delivered with living organisms.

In light of the above findings as regards state of the art apparatus there is still a need for providing devices that combine filtration and UV treatment and enable transport and storage of water, wherein UV lamp is energized by ordinary motion of the apparatus and water is not allowed to be dispensed without being treated by sufficient UV light intensity. These objects have been solved by the novel apparatus as disclosed in Claim 1.

### Objects of the Invention

One of the objects of the present invention is to provide an apparatus for transporting, storing and cleaning of raw water so as to dispense physiologically acceptable potable water.

Another object of the present invention is to provide an apparatus which apply combined filtering and UV treatment.

A further object of the present invention is to provide an apparatus having UV treatment means that is energized by motion of the apparatus.

Still a further object of the present invention is to provide an apparatus in which the water is not allowed to be dispensed without being treated with sufficient UV light intensity.

Further objects and corresponding advantages of the present invention shall be clear and understandable in light of the below description and accompanying drawings for those skilled in the field of water treatment technology.

### Brief Description of the Figures

Accompanying drawings are given solely for the purpose of exemplifying an apparatus according to the present invention wherein:
Fig. 1 shows a perspective view of an apparatus according to a preferred embodiment of the present invention;
Fig. 2 demonstrates partially exploded view of the apparatus according to the preferred embodiment shown in Figure 1;
Fig. 3 demonstrates a side view of the apparatus according to the preferred embodiment shown in Figure 1;
Fig. 4 is a frontal view of the preferred embodiment showing the UV treatment section of the apparatus;
Fig. 5 shows a perspective view of the exemplary cut out valve of the UV treatment section according to a preferred embodiment of the present invention wherein said valve is in opened position;
Fig. 6 shows a perspective view of the exemplary cut out valve of the UV treatment section according to a preferred embodiment of the present invention wherein said valve is in closed position;

### Detailed Description of the Invention

The present invention is hereby explained in detail with reference to the accompanying drawings showing an exemplary embodiment of the present invention scope of which is only limited by Claim 1.

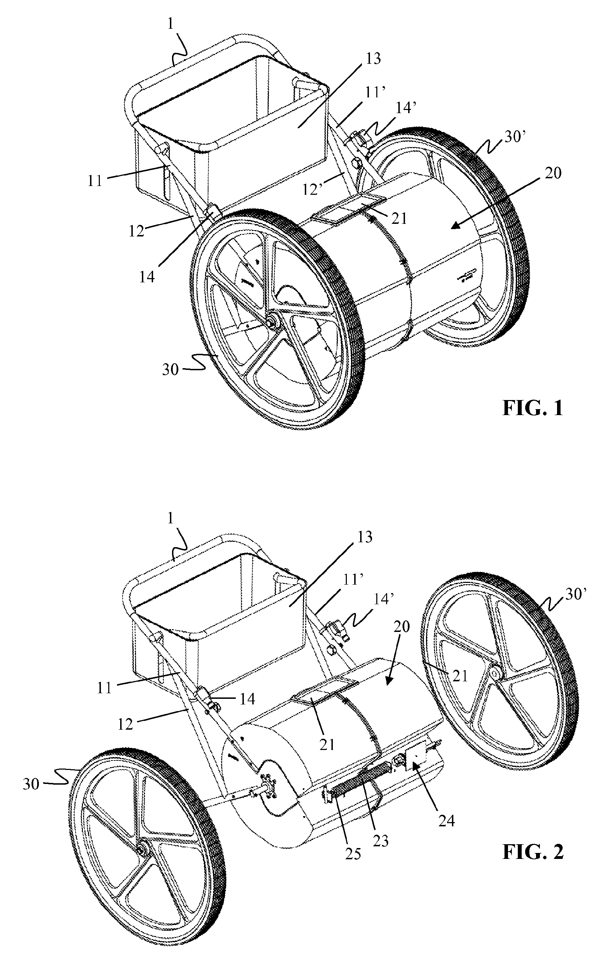

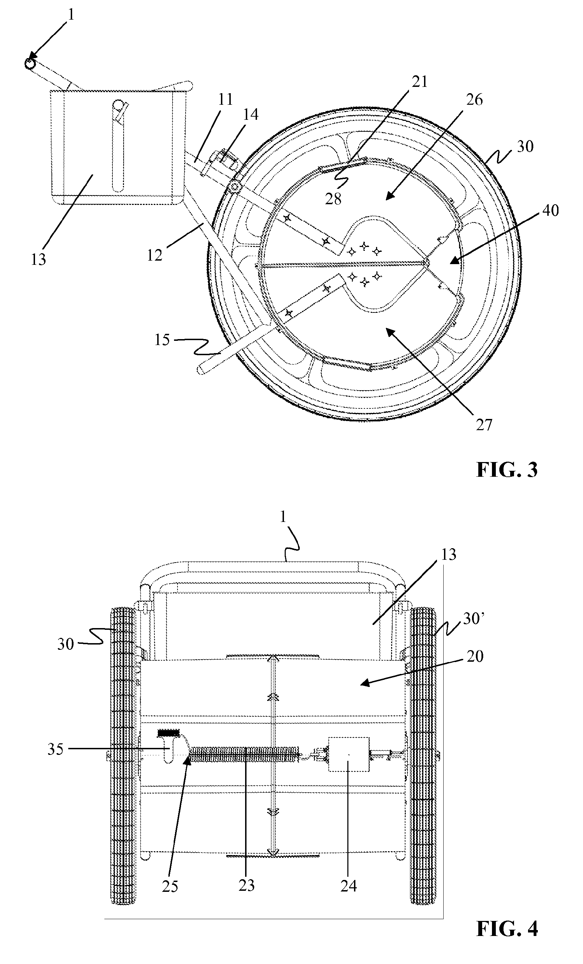

The apparatus of the present invention comprises a water housing (20) consisting of at least one raw water compartment (26) preferably located right above at least one clean water compartment (27) as shown in Figures 2 and 3. The raw water and clean water compartments (26, 27) preferably together form a cylindrical body of the water housing (20) as well be seen in Figure 1. The raw water held in the raw water compartment (26) is thereby forced to move through the clean water compartment (27) under gravity by way of the water piping (23) one end of which is connected to said raw water compartment (26) and the other end is introduced into said clean water compartment (27).

The apparatus of the invention is of a mobile nature mobility of which is provided by at least one wheel (30) axially attached to the water housing (20). The apparatus, in the preferred embodiment as shown in the Figures comprises more than one wheel (30, 30') wherein one of the wheels (30, 30') is mounted on one side of the housing (20) whereas the other is mounted on the opposite end of said housing (20) such that balance is provided in at least one axis of the ground.

The apparatus may further comprise at least one pushing bar (11) that extends to a handle (1) wherein said pushing bar (11) is attached to the water housing (20) so as to comfortably drag and move said housing (20) from one location to another. According to the preferred embodiment a further pushing bar (11') is provided and both of said pushing bars (11, 11') are bilaterally attached to the sides of said water housing (20). According to the preferred embodiment, there is provided also an auxiliary bar (12) for increasing endurance of the apparatus which is advantageous for heavy load water transportation. In the embodiment shown in the Figures, there is further provided a support bar (15) which primarily functions as a support to hold overall apparatus in uphold position when the handle (1) is left and one end of the support bar (15) is allowed to engage on the ground. Said supporting bar (15) and pushing bar (11) are preferably arranged to be attached into a close proximity of the wheel axles (22) for mechanical endurance and all three bars (11, 12, 15) are arranged to form a triangle. In said preferred embodiment, the apparatus is provided with additional bars (11', 12', 15') that are identical to those mentioned above. In this arrangement the above mentioned two sets of bars (11, 11', 12, 12', 15, 15') bilaterally engage to the both sides of the water housing (20).

Said water housing (20) comprises a water inlet (21) for filling water to the raw water compartment (26). The housing (20) further comprises at least one porous filter (28) in order to filter out the dirtiness and particles that cause turbidity. In the context of the present invention, "particles" refer to any solid or semi-solid material suspended or precipitated in the raw water. It is therefore, an object of the present invention to provide an apparatus with a filter (28) having pores which are substantially capable of filtering out said particles. Said filter (28) is preferably located in the rim of the water inlet (21) so that the dirty water may be filtered before being filled into the raw water compartment (26). This arrangement is particularly advantageous as the particles in raw water are eliminated before entering said raw water compartment (26), thereby accumulation of the particles and dirtiness in the housing (20) is eliminated beforehand. A further advantage is that maintenance and replacement of the filter (28) is simplified by the readily reachable position thereof.

The porous filter (28) used in the apparatus of the present invention may be selected among those of the conventional types such as polymeric filters, charcoal filters and ceramic filters. The selection may be made based on the nature of the raw water. Nevertheless, the pore size of the filter (28) may be arranged such that elimination of the particles in the raw water would be sufficient. Bacteria and other germs need not be caught in the filter (28) as the apparatus further comprise a UV treatment section (40) for carrying out this mission. Therefore, one of the advantages of the present invention is that requirement for small sized pores of the filter (28) is eliminated.

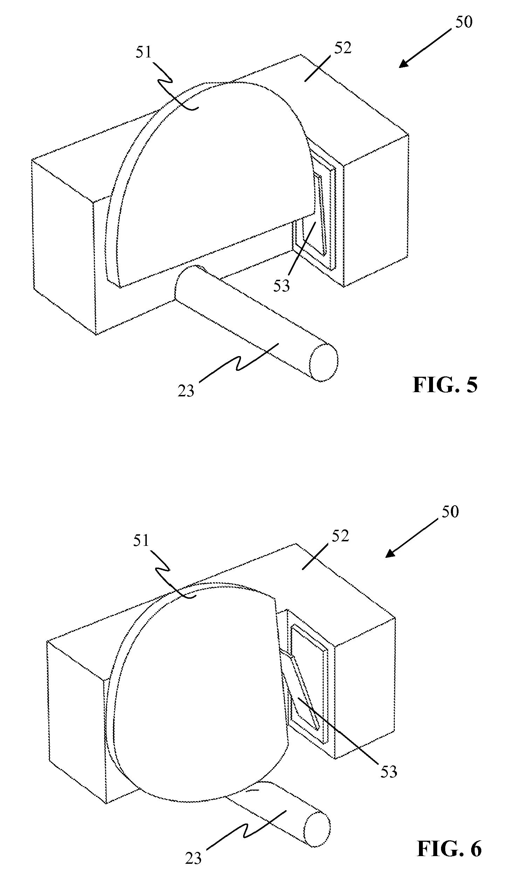

Referring now to Figures 2 and 4, the above mentioned UV treatment section (40) of the present invention is preferably in the form of a longitudinal truncation along the water housing (40). The UV treatment section (40) comprises a UV treatment assembly having a water piping (23) in close proximity with a UV light source (25). The water piping (23) is being of a transparent or translucent nature and is preferably wound about the light source (25) as a coil so as to lengthen the travel path and prolong the treatment time of water, and effectively destroy the germs up until the water is introduced into the clean water compartment (27). There is further provided a valve assembly (24) comprising a cut out valve (50) as shown in Figures 5 and 6.

The UV light source (25) employed in the apparatus of the present invention is energized by at least one electricity generator (14) adapted to produce power as the apparatus moves from one location to another. In the preferred embodiment, said generator (14) is being attached to a suitable position of the apparatus, i.e. onto the pushing bar (11), such that the generator (14) engages with a wheel (30) and produces electricity by rotation of said wheel (30). Preferably, at least two generators (14, 14'), each of them engaging with the corresponding wheels (30, 30'), are provided for increasing light intensity of the UV light source (25). The position of the electricity generator (14) may, however be arranged in different locations such as any position on the auxiliary bar (12, 12'), support bar (15, 15') and even on the water housing (20) as long as the generator (14) become engageable with the wheels (30, 30').

The valve assembly (24), which is one of the major components of the present invention comprises a cut out valve (50) electrically connected to the above identified electricity generators (14). It is known in the sanitization art that amount of bacteria and germs destroyed by UV light is directly proportional to the intensity of light emitted by the UV lamp. In other words weak light of UV lamp may not be sufficient destroy most of the germs in a treatment medium. Starting from this fact, the valve (50) of the present invention is arranged to allow raw water to pass through the piping (23) "in case" the produced electricity is sufficient to energize the UV light source with sufficient light intensity enough for killing most of the germs in the raw water. This is because, if electricity produced is not sufficient to produce enough intensity of light, most of the bacteria in the raw water can still be alive while passing into the clean water compartment (27), which in turn causes serious health risks.

Therefore, the valve assembly (24) of the present invention is electrically connected to at least one electricity generator (14) wherein the assembly is adapted to allow the water flow in the piping (23) if the electricity produced is above a threshold value. Once the generator (14) produce insufficient current because of, for instance slow rotation of the wheel (30, 30'), the assembly (24) automatically operate the cut out valve (50) in order to stop the water flow inside the piping (23).

In order to achieve the above objects, the valve assembly (24) may comprise any conventional circuitry (not shown) capable of producing a signal depending on a threshold value of the current or voltage of the circuit (not shown). For instance, the cut out valve (50) may comprise a conventional on/off switch automatically operated by current or voltage in the circuit. The circuit may also be equipped with a number of capacitors (not shown) to achieve the above objects. The inventor reports that, for the case of an ordinary 6V 4W UV-C bulb, the system components may be selected such that the valve (50) is kept closed under a voltage value of 6V, and is opened above this value.

A simple valve (50) arrangement as shown in Figures 5 and 6 can be used for above purposes. In accordance with this arrangement the valve (50) is provided with an L shaped body (52) comprising an activation latch (53) abutting to a semi-circular cutting element (51) which is operated by the latch (53). Said cutting element (51) is held in a resting position where the piping (23) is allowed to conduct water flow, and is held in a closed position where it presses the piping (23) and stops the water flow by the help of the latch (53) mentioned above.

Nevertheless, as may be appreciated by those skilled in the art, various valve arrangements different from the above type may be used for cut out purposes with similar function. According to the preferred embodiment, the cut out valve (50) is located between the outlet of the raw water compartment (26) and UV treatment region of the piping (23) so that, without sufficient current, raw water would not enter to said UV treatment region (i.e. coil in Figure 4). However, it is to be understood that the cut out valve (50) may be located on any position of the water piping (23) in order to achieve objectives of the present invention.

Referring now to Figure 4, the apparatus of the present invention further comprise a tap (35) to dispense clean water. According to the preferred embodiment, the tap (35) is located on the opposite side of the water housing (20) with respect to the user side, such that when said user pivotally rotates the pushing bar (11) and handle (1) around the wheel axles (22) and leaves said handle (1) on the ground at the other side, the tap (35) becomes easily reachable by the users. The position of said tap (35) may advantageously be arranged such that all water in the clean water compartment (27) may be decanted under gravity.

The apparatus described in detail with the above description may further comprise auxiliary equipments such as a basket (13) attachable, for instance, to the pushing bar (11, 11') so that the user may carry additional stuff such as water in small drums. The apparatus may also be equipped with a handbrake (not shown) for comfortably riding the apparatus in ardous geographical conditions.

The apparatus of the present invention may further comprise a light source (not shown), preferably a LED, which is in electrical communication with one of the components selected from the electrical generator (14), the UV light source (25) or the cut out valve (50). This light source is particularly advantageous for indicating whether water flow inside the piping (23) is blocked by the cut out valve (50). Thus, the user may recognize if water is treated with sufficient energy, and depending thereto, he may decide on whether he has to increase the speed of the apparatus. This light source preferably in the form of a LED, may be located on the handle (1) or any portion of the apparatus visible to the user.

## Claims

1. An apparatus for storing, transporting and cleaning water, the apparatus comprising:
a water housing (20) having a raw water compartment (26) with an inlet (21) and a clean water compartment (27) having an outlet for dispensing clean water which compartments (26, 27) are being in fluid communication via a transparent or translucent piping (23);
at least one wheel (30, 30') for moving the apparatus from one location to another;
a UV light source (25) in electrical communication with at least one electricity generator (14, 14'), said generator (14, 14') being located on the apparatus in close proximity with at least one wheel (30, 30') such that the generator (14, 14') produces electricity via rotation of the wheel (30, 30') for energizing the UV light source (25), said UV light source (25) being in close proximity with a portion of the piping (23) such that the raw water is exposed to UV light while moving from the raw water compartment (26) to the clean water compartment (27);
a porous filter (28) for filtering out particles in the raw water; and
a valve assembly (24) having a cut off valve (50) located on the piping (23),
said valve assembly (24) being in electrical communication with the electricity generator (14, 14') in a circuit wherein the assembly (24) is adapted to be activated based on a threshold value of current or voltage in said circuit such that when threshold value is not exceeded cut out valve (50) is kept in closed position for not to allow water flow in the piping (23).

2. An apparatus according to claim 1, wherein said porous filter (28) is located in the rim of the water inlet (21).

3. An apparatus according to claim 1, wherein the raw water compartment (26) is arranged above the clean water compartment (27) so as to allow the raw water to flow through the clean water compartment (27) by way of gravity, and said raw water compartment (26) and clean water compartment (27) together form a cylindrical water housing (20).

4. An apparatus according to claim 1, wherein the apparatus further comprises at least one pushing bar (11) and a handle bar (1) for comfortably moving the apparatus along a surface.

5. An apparatus according to claim 4, wherein the apparatus comprises two pushing bars (11, 11') connected to both sides of the water housing (20).

6. An apparatus according to claim 5, wherein the apparatus further comprises two support bars (15, 15') each being connected to the pushing bars (11, 11') by way of auxiliary bars (12, 12') wherein said support bars (15, 15') are arranged to keep the apparatus in uphold position by engaging to ground when user leaves the handle bar (1).

7. An apparatus according to claim 1, wherein at least a portion of the piping (23) is wound about the UV light source (25) to form a coil so as to increase the effect of the UV treatment.

8. An apparatus according to claim 1, wherein the UV light source (25) and valve assembly (24) are located in a UV treatment section (40) located in the water housing (20).

9. An apparatus according to claim 1, wherein the apparatus comprises at least two wheels (30, 30') and two electricity generators (14, 14') wherein one wheel (30) and generator (14) is located on one side of the housing (20) and the other wheel (30') and generator (14') are located on the other side of the housing (20).

10. An apparatus according to claim 1 and 6, wherein the apparatus further comprises a water tap (35) located in a position of the clean water compartment (27) such that when a user rotates the handle bar (1) pivotally around the wheel axle (22) and leaves the same on the ground, the tap (35) becomes in a position where all water in said clean water compartment (27) is drainable via said tap (35).

11. An apparatus according to claim 1, wherein the apparatus further comprises an additional light source which is in electrical communication with one of the components selected from the electricity generator (14), UV light source (25) or cut out valve (50), and is adapted to indicate whether water flow inside the piping (23) is blocked by the cut out valve (50).

12. An apparatus according to claim 1, wherein the porous filter is a polymeric filter, charcoal filter or ceramic filter.

13. An apparatus according to claim 1, wherein the UV light source is a 6V 4W UV-C bulb.

14. An apparatus according to claim 1, wherein the cut out valve (50) comprises an on/off switch adapted to be automatically operated by current or voltage in the circuit.

15. Use of the apparatus according to claim 1 for treatment of raw water.
